# EUROPEAN PATENT APPLICATION

(11) **EP 4 340 410 A1**
(43) Date of publication of application: **20.03.2024**
(21) Application number: 22807056.1
(22) Date of filing: 16.02.2022
(51) Int. Cl.: H04W 4/50, H04W 76/18, H04W 60/00, H04W 12/08

(54) **SERVER, REQUEST ENTITY, AND METHODS THEREFOR**

(30) Priority: 10.05.2021 JP 2021079697
(71) Applicant: NEC Corporation, 108-8001 Tokyo (JP)
(72) Inventor: TAKAKURA Tsuyoshi, Tokyo 110-0012 (JP); TAMURA Toshiyuki, Tokyo 108-8001 (JP)
(74) Representative: MacDougall, Alan John Shaw
(86) International application number: PCT/JP2022/006279
(87) International publication number: WO 2022/239349

(57) **Abstract**

A first server (5) receives from a requesting entity (2) a request for generating an Edge Enabler Client (EEC) Context. If the first server (5) determines access to an edge data network (EDN) (4) is permissible by verifying security credentials included in the request, it attempts to identify a second server (6) located in the EDN (4) based on a selection criterion. The selection criterion includes a requirement indicated in an AC Profile included in the request. If the access to the EDN (4) is not permissible or the requirement indicated in the AC Profile is not fulfilled, the first server (5) sends to the requesting entity (2) a second response message containing a failure cause, which is information indicating that the second server (6) cannot be identified. This can contribute, for example, to providing a suitable selection criterion for identifying an edge server.

## Description

### Technical Field

The present disclosure relates to radio communication networks, and in particular to devices and methods for edge computing.

### Background Art

Edge computing aims to move applications, data, and computing power (services) from centralized points (e.g., centralized data centers) to locations closer to users (e.g., distributed data centers). The Industry Specification Group called Multi-access Edge Computing (MEC) of the European Telecommunications Standards Institute (ETSI) has standardized an application platform and APIs for edge computing. For example, MEC provides application developers and content providers with cloud computing capabilities and information technology (IT) service environments within a Radio Access Network (RAN) in close proximity to mobile subscribers. This environment provides ultra-low latency and high bandwidth, as well as direct access to radio network information (radio network information generation) (e.g., subscriber location and cell load) that can be leveraged by applications and services.

The Third Generation Partnership Project (3GPP) SA6 working group has begun standardization work on an architecture for enabling Edge Applications. (See, for example, Non-Patent Literature 1). This 3GPP architecture is called the EDGEAPP architecture. The EDGEAPP architecture provides a specification of an enabling layer to facilitate communication between application clients (ACs) running on a User equipment (UE) and applications deployed at the edge. According to the EDGEAPP architecture, edge applications provided by Edge Application Servers (EASs) are provided to ACs in a UE by an Edge Configuration Server (ECS) and an Edge Enabler Server (EES) through an Edge Enabler Client (EEC) of that UE.

An AC running on a UE needs to discover a server application (i.e., EAS in 3GPP SA6 terminology, or MEC application in ETSI ISG MEC terminology) on the edge cloud. The AC can use another client on the UE, i.e., the EEC, for discovery of the server application. The EEC provides ACs with discovery of available EASs in the edge data network.

A UE is initially provisioned from an ECS with information required to connect to an Edge Data Network (EDN). The EDN includes one or more EESs and one or more EASs. More specifically, the EEC of the UE communicates with the ECS for service provisioning. Service provisioning allows configuring the EEC with information about available Edge Computing services, based on the UE location, service requirements, and connectivity. This configuration includes the necessary address information for the EEC to establish one or more connections with one or more EESs deployed in the EDN.

For this service provisioning, the EEC makes a service provisioning request to the ECS to request resources for providing services in the EDN and information about the connection or configuration. The information about the connection or configuration includes, for example, information about available edge computing services, information about a server in the EDN, identifier (ID) and address information (e.g., Internet Protocol (IP) address, Single-Network Slice Selection Assistance Information (S-NSSAI), and service area information) for that server, EDN configuration information, and configuration information about the Edge Data Network for the EEC to establish the connection.

The EEC performs a registration procedure, called EEC registration, to an EES in order to provide information that may be used by the EES in edge computing services. The EEC registration allows the EES to perform the creation (initialization), update and removal of information resources related to the EEC. The EEC registration also enables the sharing of EEC Context among entities (e.g., UE and Application Server) in the EDGEAPP architecture. The determination of whether or not EEC registration is permitted (EEC Registration Permit Decision) is based on the security credentials and/or at least one Application Client Profile (AC Profile(s)) provided by the EEC. For EEC registration, the EEC makes an EEC registration request to the EES.

According to Non-Patent Literature 1, the EES verifies the security credentials provided by the EEC and, if AC Profile(s) are provided by the EEC, determines if the requirements indicated in the AC Profile(s) can be fulfilled.

The entities that perform EEC registration are hereinafter collectively referred to as requesting entities. EEC registration requests (EEC registration request or EEC registration update request) are collectively referred to as simply "requests".

### Citation List

### Non Patent Literature

[Non Patent Literature 1] 3GPP TS 23.558 V2.0.0 (2021-03) "3rd Generation Partnership Project; Technical Specification Group Services and System Aspects; Architecture for enabling Edge Applications; (Release 17)", March 2021

### Summary of Invention

### Technical Problem

The inventors have studied the EDGEAPP architecture and found various problems. One of these problems relates to the identification (or selection, or decision, or discovery) of an EAS(s) that satisfies the requirements contained in a request by a requesting entity (e.g., EEC). At this time, it is not sufficiently clear how an EES specifically identifies an EAS(s) in the EEC registration. In other words, at this time, the 3GPP SA6 Working Group has not sufficiently defined the selection criteria or logic for identifying in the EEC registration a preferred or suitable server(s) (hereafter referred to as an edge server(s)) located in an Edge Data Network. In the 3GPP EDGEAPP architecture, the edge server(s) include one or more EESs and one or more EASs.

Another one of the problems concerns the behavior of the requesting entity (e.g., EEC) when an EEC registration request fails. At present, it is not sufficiently clear how the requesting entity should behave when an EEC registration request fails.

One of the objects to be attained by example embodiments disclosed herein is to provide apparatuses, methods, and programs that contribute to solving at least one of the above-described problems. It should be noted that this object is merely one of the objects to be attained by the example embodiments disclosed herein. Other objects or problems and novel features will be made apparent from the following description and the accompanying drawings.

### Solution to Problem

In a first aspect, a first server includes at least one memory and at least one processor coupled to the at least one memory. The at least one processor is configured to: receive from a requesting entity a request, including security credentials and at least one Application Client Profile, for generating an Edge Enabler Client (EEC) Context which is information about the requesting entity; determine whether or not access to an edge data network is permissible by verifying the security credentials; and if access to the edge data network is permissible, attempt to identify a second server located in the edge data network based on at least one selection criterion. The at least one processor is configured to, if the second server is identified, send to the requesting entity a first response message containing information indicating that the request was successful. The at least one selection criterion includes a requirement indicated in the at least one Application Client Profile. The at least one processor is configured to, if the access to the edge data network is not permissible or the requirement indicated in the at least one Application Client Profile is not fulfilled, send to the requesting entity a second response message containing a failure cause, which is information indicating that the second server cannot be identified.

In a second aspect, a method performed by the first server includes the following steps:
(a) receiving from a requesting entity a request for generating an Edge Enabler Client (EEC) Context which is information about the requesting entity, the request including security credentials and at least one Application Client Profile;
(b) determining whether or not access to an edge data network is permissible by verifying the security credentials;
(c) if access to the edge data network is permissible, attempting to identify a second server located in the edge data network based on at least one selection criterion;
(d) if the second server is identified, sending to the requesting entity a first response message containing information indicating that the request was successful, wherein the at least one selection criterion includes a requirement indicated in the at least one Application Client Profile; and
(e) if the access to the edge data network is not permissible or the requirement indicated in the at least one Application Client Profile is not fulfilled, sending to the requesting entity a second response message containing a failure cause, which is information indicating that the second server cannot be identified.

In a third aspect, a requesting entity includes at least one memory and at least one processor coupled to the at least one memory. The at least one processor is configured to: send to a first server a request, including security credentials and at least one Application Client Profile, for generating an Edge Enabler Client (EEC) Context which is information about the requesting entity; receive a response message to the request from the first server; and if the response message includes a failure cause, which is information indicating that a second server cannot be identified, send the request to a first server that is different from the first server. The failure cause is included in the response message if access to an edge data network is not permissible, or if a requirement indicated in the at least one Application Client Profile is not fulfilled.

In a fourth aspect, a method performed by a requesting entity includes the following steps:
(a) sending to a first server a request for generating an Edge Enabler Client (EEC) Context which is information about the requesting entity, the request including security credentials and at least one Application Client Profile;
(b) receiving a response message to the request from the first server; and
(c) if the response message includes a failure cause, which is information indicating that a second server cannot be identified, sending the request to a first server that is different from the first server, wherein the failure cause is included in the response message if access to an edge data network is not permissible, or if a requirement indicated in the at least one Application Client Profile is not fulfilled.

In a fifth aspect, a program includes a set of instructions (software codes) that, when loaded into a computer, cause the computer to perform the method according to the second or fourth aspect described above.

### Advantageous Effects of Invention

According to the above-described aspects, it is possible to provide apparatuses, methods, and programs that contribute to solving at least one of the above-mentioned problems.

### Brief Description of Drawings

Fig. 1 shows an example of the architecture of a network according to an example embodiment;
Fig. 2 is a flowchart showing an example of the operation of a first server according to an example embodiment;
Fig. 3 is a flowchart showing an example of the operation of a first server according to an example embodiment;
Fig. 4 is a flowchart showing an example of the operation of a requesting entity according to an example embodiment;
Fig. 5 is a sequence diagram showing an example of the operations of an EEC and EES according to an example embodiment;
Fig. 6 is a flowchart showing an example of the operation of a requesting entity according to an example embodiment;
Fig. 7 is a sequence diagram showing an example of the operations of an EEC and EES according to an example embodiment;
Fig. 8 is a sequence diagram showing an example of the operations of an EEC and ECS according to an example embodiment;
Fig. 9 is a block diagram showing an example configuration of a UE according to an example embodiment; and
Fig. 10 is a block diagram showing an example configuration of a server according to an example embodiment.

### Example Embodiment

Specific example embodiments will be described hereinafter in detail with reference to the drawings. The same or corresponding elements are denoted by the same symbols throughout the drawings, and duplicated explanations are omitted as necessary for the sake of clarity.

Each of the example embodiments described below may be used individually, or two or more of the example embodiments may be appropriately combined with one another. These example embodiments include novel features different from each other. Accordingly, these example embodiments contribute to attaining objects or solving problems different from one another and contribute to obtaining advantages different from one another.

The example embodiments presented below are described primarily for the 3GPP system (e.g., 5G system (5GS)). However, these example embodiments may be applied to other radio communication systems.

### First Example Embodiment

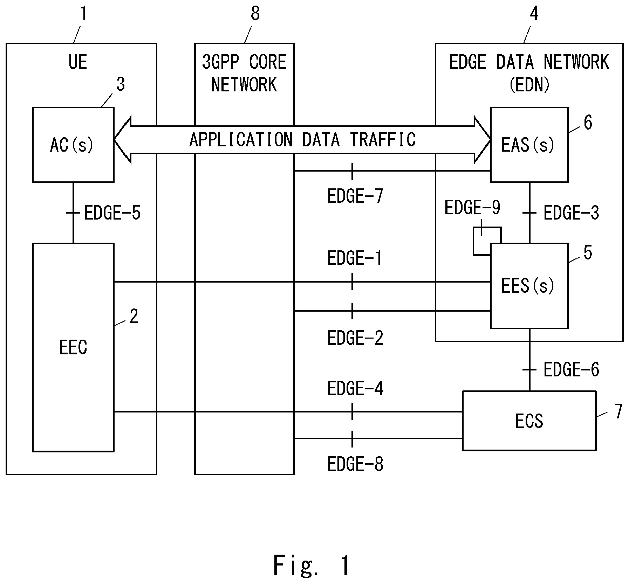

Fig. 1 shows an example of the architecture of a network according to this example embodiment. The architecture in Fig. 1 corresponds to the 3GPP EDGEAPP architecture. Each of the elements shown in Fig. 1 is a functional entity, providing functions and interfaces as defined by the 3GPP. Each of the elements (functional entities) shown in Fig. 1 can be implemented, for example, as a network element on dedicated hardware, as a software instance running on dedicated hardware, or as a virtualized function instantiated on an application platform.

In the example in Fig. 1, a User Equipment (UE) 1 includes an Edge Enabler Client (EEC) 2 and one or more Application Clients (ACs) 3. In other words, an EEC 2 and one or more ACs 3 are deployed in the UE 1 and run on the UE 1. Although not explicitly shown in Fig. 1, the UE 1 communicates with a 3GPP core network 8 (e.g., 5G Core (5GC)) via an access network (e.g., Radio Access Network (e.g., NG Radio Access Network (NG-RAN))). In this way, the UE 1 provides the EEC 2 and AC(s) 3 with connectivity to a data network via the access network and the 3GPP core network 8.

The EEC 2 provides supporting functions required by the AC(s) 3. Specifically, the EEC 2 provides provisioning of configuration information to enable the exchange of application data traffic with an Edge Application Server (EAS). In addition, the EEC 2 provides functions for a discovery of one or more EASs available within an Edge Data Network (EDN) 4. The EEC 2 uses EAS endpoint information obtained from the EAS discovery in routing of outgoing application data traffic to an EAS. Further, the EEC 2 provides functions for registration (i.e., registration, update, and de-registration) of an EES 5 and EAS(s) 6.

Each AC 3 is an application running on the UE 1. Each AC 3 connects to one or more EASs to utilize edge computing services and exchanges application data traffic with these EASs.

One Edge Data Network (EDN) 4 includes one or more Edge Enabler Servers (EES) 5 and one or more Edge Application Servers (EASs) 6. The EDN 4 may be a Local Area Data Network (LADN). An LADN allows limited access to a DN (and the corresponding Data Network Name (DNN)) only in one or more specific areas. Outside of these areas, the UE 1 cannot access the relevant DN (and DNN). An area where LADN DNN is available is called a LADN Service Area and is configured in the network as a set of Tracking Areas (TAs). DNNs that do not use LADN features do not have a LADN service area and are not restricted by those features. An LADN service area can be provided to the UE 1 by an Access and Mobility Management Function (AMF) in the 3GPP core network 8 when the UE 1 registers. This allows the UE 1 to know the area where the LADN (or EDN) is available and not attempt to access this LADN (or EDN) outside of this area.

Each EES 5 provides supporting functions required by an EAS(s) 6 and the EEC 2. Specifically, each EES 5 provides the EEC 2 with the provisioning of configuration information, thereby enabling the exchange of application data traffic with an EAS(s) 6. Each EES 5 provides functions for registration (i.e., registration, update, and de-registration) of the EEC 2 and EAS(s) 6. Each EES 5 provides functions of application context transfer between EESs. These functions are required for edge application mobility (or application context relocation) for service continuity. Edge Application Mobility relocates the application context or application instance or both for a user (i.e., AC) from a source EAS (or EDN or LADN) to a target EAS (or EDN or LADN). Edge application mobility can be triggered by UE mobility events or non-UE mobility events. UE mobility events include, for example, intra-EDN UE mobility, inter-EDN UE mobility, and LADN-related UE mobility. Non-UE mobility events include, for example, EAS or EDN overload situations and EAS maintenance (e.g., graceful shutdown of an EAS).

In addition, each EES 5 supports functionality of an Application Programming Interface (API) invoker and API exposing function. Each EES 5 may interact with the 3GPP Core Network 8 directly (e.g., via a Policy Control Function (PCF)) or indirectly (e.g., via a Network Exposure Function (NEF) or Service Capability Exposure Function (SCEF)) to access services and capabilities of network functions in the 3GPP Core Network 8. Each EES 5 may support external exposure of services and capabilities of 3GPP network functions to EAS(s) 6.

Each EAS 6 is located in the EDN 4 and performs server functions of an application. The server functions of an application may be available only at the edge. In other words, the server functions of an application may be available only as an EAS. However, the server functions of an application may be available both at the edge and in the cloud. In other words, the server functions of an application may be available as an EAS and in addition may be available as an application server in the cloud. The term "cloud" here means a central cloud located further away from the UE 1 than the EDN 4. Accordingly, an application server in the cloud means a server deployed in a centralized location (e.g., a centralized data center). Each EAS 6 may consume or utilize 3GPP core network capabilities. Each EAS 6 may directly invoke 3GPP Core Network function APIs. Alternatively, each EAS 6 may consume or utilize 3GPP core network capabilities via the EES 5, or via a NEF or SCEF.

The Edge Configuration Server (ECS) 7 provides supporting functions needed for the EEC 2 to connect with EES(s) 5. Specifically, the ECS 7 provides provisioning of edge configuration information to the EEC 2. The edge configuration information includes information for the EEC 2 to connect to EES(s) 5 (e.g., service area information applicable to an LADN) and information for establishing a connection with EES(s) 5 (e.g., Uniform Resource Identifier (URI)). The ECS 7 provides functions for registration (i.e., registration, update, and de-registration) of EES(s) 5. In addition, ECS 7 supports functionality of an API invoker and API exposing function. The ECS 7 may interact with the 3GPP Core Network 8 directly (e.g., via a PCF) or indirectly (e.g., via a NEF or SCEF) to access services and capabilities of network functions in the 3GPP Core Network 8. The ECS 7 may be deployed in the Mobile Network Operator (MNO) domain serving the 3GPP core network 8 or in a thirdparty domain by a service provider (e.g., an Edge Computing Service Provider (ECSP)).

The example configuration in Fig. 1 shows only representative elements for illustrative purposes. For example, the ECS 7 may be connected to multiple EDNs, including the EDN 4.

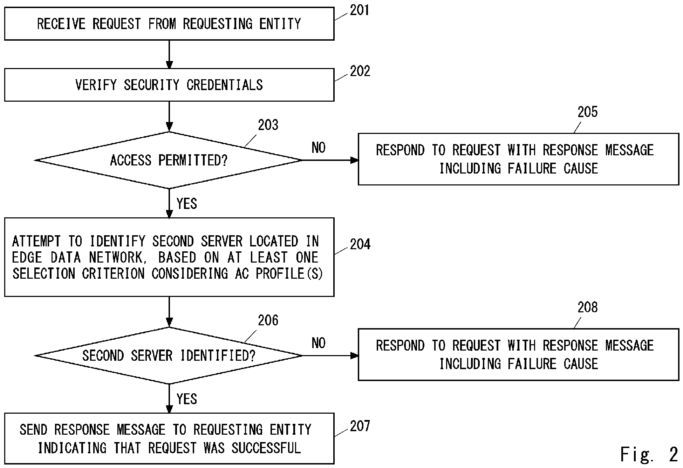

Fig. 2 is a flowchart showing an example of the operation of a first server according to this example embodiment. In the EEC registration, the first server attempts to identify (or discover, or select, or determine) a preferred or suitable edge server deployed in the EDN 4. In one example, the first server may be an EES 5 and may attempt to identify one or more EAS(s) in response to a request from the EEC 2 of the UE 1.

In step 201, the first server receives a request from a requesting entity. The requesting entity may be the EEC 2, and the first server may be the EES 5. The request may be an EEC registration request or an EEC registration update request. The request may be referred to herein as an EEC registration request.

In step 202, upon receipt of the request, the first server verifies security credentials contained in the request. Upon verifying the security credentials and determining that the first server can allow access to the edge data network (YES in step 203), the procedure proceeds to step 204. In step 204, the first server attempts to identify a second server that is located in the EDN 4 and meets at least one selection criterion. In other words, the first server identifies a second server deployed within the EDN 4 based on at least one selection criterion. Here, at least one factor considered in the at least one selection criterion includes requirements (at least one AC Profile (AC Profile(s))) included in the request.

An AC Profile(s) may indicate a plurality of items. Each item indicates one or more sets of characteristics. The AC Profile(s) may include, for example, at least one of the following: "Application Client Type", "Application Client Schedule", "Expected Application Client Geographical Service Area", "Service Continuity Support", or "List of EASs". The Application Client Type indicates an application category or type (e.g., V2X) of the AC 3. The Application Client Schedule indicates an expected operation schedule, e.g., time window, of the AC 3. The Expected Application Client Geographical Service Area indicates an expected location(s), e.g., route, of the UE 1 during the expected operating schedule of the AC 3. The Service Continuity Support indicates whether or not service continuity support is needed by the AC 3. The List of EASs includes an EAS ID and may further include Expected Service Key Performance Indicators (KPIs) and Minimum required Service Key Performance Indicators (KPIs). The Service KPIs indicate service characteristics required by the AC 3. These service characteristics include, for example, at least one of the following: connection bandwidth, maximum request rate to be generated by the AC, maximum response time, maximum compute resources required by the AC, maximum memory resources required by the AC, or Information specific to the AC type (e.g., video, Virtual Reality (VR), etc.).

The first server may identify an EAS that matches the provided AC Profile. At this point, the first server may identify an EAS(s) that matches all items in the AC Profile. Alternatively, the first server may identify an EAS(s) that matches at least one item in the AC Profile. Alternatively, the first server may identify an EAS(s) that matches all items in the AC Profile except the "List of EASs". Alternatively, the first server may identify an EAS(s) that matches at least one item of the AC Profile except the "List of EASs".

In one example, if the AC Profile contains Expected Service KPIs, the first server may identify an EAS(s) that matches at least one item in the Expected Service KPIs. Alternatively, the first server may identify an EAS(s) that matches all items in the Expected Service KPIs. In addition, if the Application Client profile includes items other than "List of EASs" (i.e., "Application Client Type", "Application Client Schedule", "Expected Application Client Geographical Service Area", "Service Continuity Support"), the first server may identify an EAS(s) that also match at least one such other item, in addition to the Expected Service KPIs described above.

In one example, if the AC Profile contains Minimum required Service KPIs, the first server may identify an EAS(s) that matches at least one item in the Minimum required Service KPIs. Alternatively, the first server may identify an EAS(s) that matches all items included in the Minimum required Service KPIs. In addition, if the Application Client profile includes items other than "List of EASs" (i.e., "Application Client Type", "Application Client Schedule", "Expected Application Client Geographical Service Area", "Service Continuity Support"), the first server may identify an EAS(s) that also match at least one such other item, in addition to the Minimum required Service KPIs described above.

If multiple AC Profiles are provided, the first server identifies an EAS(s) on a per AC Profile basis as described above. Note that "identifying an EAS(s)" may mean that information (e.g., characteristics, performance, status) on an EAS matches information regarding the Application Client contained in the AC Profile. Alternatively, this may mean that information (e.g., characteristics, performance, status) about an EAS satisfies a condition regarding the Application Client contained in the AC Profile.

The first server may exclude from the selection any second server that it determines does not meet the requirements (AC Profile(s)) contained in the request as a result of identifying the EAS(s) based on the selection criterion. In the case of selection (or determination, or discovery, or identification) of EAS(s) by the first server, second servers are EASs. In this case, other factors considered in the at least one selection criterion may include at least one of the following: congestion state of a server deployed in the EDN 4, the location of the UE 1 (UE location), and the operational status of a second server (i.e., EAS).

The congestion state of a server may indicate whether the server is congested or not. Alternatively, the congestion state may indicate one of three or more congestion levels (e.g., no congestion, low congestion, medium congestion, high congestion). The congestion state may be referred to as a load state. In one example, the first server may identify a second server that is not congested and meets the remaining selection criteria. In one example, the first server may exclude a second server that is determined to be congested (or in high load state) from the selection.

Each second server may dynamically notify the first server of its congestion state. Specifically, the second server may notify the first server of its congestion state when registering the second server with the first server, and may also notify the first server of congestion state updates in response to changes in congestion state. More specifically, each EAS 6 may notify the EES 5 of its congestion state in an Edge Application Server Registration procedure and may notify the EES 5 of its congestion state update in an Edge Application Server Registration Update procedure. Alternatively, each second server may periodically notify the first server of its congestion state.

Alternatively, the first server may perform activity monitoring of a second server. More specifically, if the first server determines that a second server is unable to provide service due to a failure of the second server or a failure of the communication path to the second server, the first server may manage this as a serious congestion state for the second server. Alternatively, in the case of a planned service interruption, such as when a second server moves to maintenance, the second server may notify the first server of this fact. In one example, the first server may exclude, from the selection, a second server that has been determined to be incapable of providing service. Alternatively, the first server may obtain congestion states of second servers from a Network Data Analytics Function (NWDAF), which is not explicitly shown in Fig. 1. In this case, the first server can subscribe to a congestion-related service provided by the NWDAF to obtain congestion information on a per-second server, per-EAS, or per-EES basis.

Each second server may determine whether or not it is congested and provide congestion state information to the first server indicating whether or not it is congested. The congestion state information is not limited to two levels. For example, the second server may identify one of three or more congestion levels (e.g., no congestion, low congestion, medium congestion, high congestion) and inform the first server of the identified congestion level. In this case, the congestion state information may be information indicating one of the three or more congestion levels.

The UE Location may identify the network to which the UE 1 is connected or the position of the UE 1. The value of the UE Location may be a Cell Identity (ID), Tracking Area Identity (TAI), Global Positioning System (GPS) Coordinates, or a civic address. The selection criteria concerning the UE location for the selection of EAS(s) by the EES 5 may require that the location of the UE 1 be within an EAS service area. The EAS service area may be a topological service area or a geographical service area. A topological service area may be defined by one or more cell IDs, or it may be identified by one or more TAIs. In one example, the first server may identify a second server that the UE location is within its EAS (second server) service area and that meets the remaining selection criteria. In one example, the first server may exclude from the selection a second server of which the EAS (second server) service area is determined not to include the UE location.

The selection criteria concerning the UE location for the selection of EAS(s) by the EES 5 may require that the location of the UE 1 be within an EAS service area. The EAS service area may be a topological service area (e.g., a Cell ID(s), or TAI(s)) or may be a geographic service area. The EAS service area may be the same as or a subset of the EDN service area. The EAS service area may be the same as or a subset of the EES service area.

If, as a result of the verification of the security credentials in step 202, the first server is unable to allow the access to the edge data network (No in step 203), the procedure proceeds to step 205. In step 205, the first server responds to the request with a response message including a failure cause indicating that the access to the edge data network cannot be granted. In step 205, the first server may respond to the request with a response message including a failure cause indicating that the second server (EAS) cannot be identified.

Upon successfully identifying a second server that meets the selection criteria in step 204 (YES in step 206), the procedure proceeds to step 207. In step 207, the first server (i.e., EES 5) sends a response message to the requesting entity (i.e., EEC 2) containing information indicating that the request was successful.

On the other hand, in response to a failure to identify a second server that meets the selection criteria in step 204 (NO in step 206), the procedure proceeds to step 208. In step 208, the first server (i.e., EES 5) responds to the request with a response message containing a failure cause indicating that the requirements contained in the request cannot be fulfilled. In step 208, the first server (i.e., EES 5) may respond to the request with a response message containing a failure cause indicating that the second server (EAS) cannot be identified.

According to the operation of the first server described above, the first server can identify, discover, select, or determine a preferred or suitable second server based on an EEC registration request sent by the requesting entity, while considering various requirements included in the request.

The first server may differentiate a response message containing a failure cause sent to the requesting entity when the second server is congested from a response message containing a failure cause sent when the second server cannot be discovered (or identified). In one example, the failure cause value set in the response message when the second server is congested may be different from the failure cause value set in the response message when the second server cannot be discovered (or identified). This allows the requesting entity to distinguish between the type of response message (or type of failure cause). It also allows the requesting entity to take different actions depending on the type of response message (or type of failure cause).

If the first server (e.g., EES 5) responds to a request with a response message containing a failure cause based on a selection criterion regarding Application Client profiles in EEC registration (i.e., if a second server cannot be discovered (or identified)), the response message may indicate a requesting entity-dependent error or condition, specifically "HTTP Status code 404 Not Found". The failure cause included in the response message may be a value indicating that the information or conditions contained in the Application Client profiles cannot be met, specifically "RESOURCE_NOT_FOUND". The failure based on the selection criteria regarding Application Client profiles here may be a failure when no EAS(s) matching the Application Client profiles can be found. When the requesting entity (e.g., EEC 2) receives a response message containing a failure cause, it may operate as follows. The EEC 2 aborts the EEC registration. Alternatively, the EEC 2 may retransmit the EEC registration request. If the number of retransmissions reaches a given limit, the EEC 2 aborts the EEC registration. Alternatively, the EEC 2 may send an EEC registration update request. Alternatively, the EEC 2 may send an EEC de-registration request. Alternatively, the EEC 2 may inform the AC 3 of the failure cause (or error). The EEC 2 may map the failure cause (or error) to an AC-specific failure cause (or error). Alternatively, the EEC 2 may transparently forward the failure cause (or error) to the AC 3. Alternatively, the EEC 2 may suppress the transmission of an EEC registration request or EEC registration update request based on the failure cause in the response message. Specifically, the EEC 2 may suppress the transmission of an EEC registration request or EEC registration update request until the Application Client profiles or some of the information contained in them is modified. In other words, the EEC 2 may suppress the transmission of an EEC registration request or EEC registration update request that requests the same information resources (EEC Context) or contains the same information as the failed request until the Application Client profiles or part of the information contained in them is changed. Alternatively, the EEC 2 may send an EEC registration request to another EES different from the EES 5. The other EES different from the EES 5 may have been pre-configured in the UE or Mobile Equipment (ME) in the service provisioning procedure. This different EES may be selected based on a policy preconfigured in the UE or ME, or based on the policy of the AC 3. Furthermore, if EEC registration fails for all EES(s) configured in the UE or ME, the EEC 2 may perform a service provisioning request procedure to the ECS 7 to obtain new EES(s) information from the ECS 7 and attempt EEC registration for a new EES(s) indicated (or configured) by the obtained information.

If the first server responds to a request with a response message containing a failure cause based on a selection criterion regarding the operational status of EASs (i.e., the second server is congested or under maintenance), the message may indicate a server-dependent error or condition, specifically "HTTP Status code 503 Service Unavailable". In this case, the EEC 2 may operate as follows, as in the case of receiving a response message containing a failure cause based on the selection criteria concerning the Application Client profiles described above. For example, the EEC 2 may abort the EEC registration. Alternatively, the EEC 2 may retransmit the EEC registration request. If the number of retransmissions of the request (e.g., EEC registration request) reaches a given limit, the EEC 2 may abort the EEC registration, for example. Alternatively, the EEC 2 may send an EEC registration update request. Alternatively, the EEC 2 may send an EEC de-registration request. Alternatively, the EEC 2 may inform the AC 3 of the failure cause (or error). The EEC 2 may map the failure cause (or error) to an AC-specific failure cause (or error). Alternatively, the EEC 2 may transparently forward the failure cause (or error) to the AC 3. Alternatively, the EEC 2 may suppress the transmission of an EEC registration request or EEC registration update request based on the failure cause in the response message. Specifically, the EEC 2 may suppress the transmission of an EEC registration request or EEC registration update request until the Application Client profiles or some of the information contained in them is modified. In other words, the EEC 2 may suppress the transmission of an EEC registration request or EEC registration update request containing the same resources or information as the failed request until the Application Client profiles or part of the information contained in them is changed. Alternatively, the EEC 2 may send an EEC registration request to another EES different from the EES 5. The other EES different from the EES 5 may have been previously configured in the EEC 2 in the service provisioning procedure. This different EES may be selected based on a policy preconfigured in the UE or ME, or based on the policy of the AC 3. Furthermore, if EEC registration fails for all EES(s) configured in the UE or ME, then EEC 2 may perform a service provisioning request procedure to the ECS 7 to obtain new EES(s) information from the ECS 7 and attempt EEC registration for a new EES(s) indicated (or configured) by the obtained information.

### Second Example Embodiment

This example embodiment provides a modification of the operations of the first server and requesting entity described in the first example embodiment. An example of the network architecture according to this example embodiment is the same as the example described with reference to Fig. 1.

In this example embodiment, if a request fails, the first server indicates explicitly or implicitly in a response message that the requesting entity will need to perform a backoff before sending the next request. In one example, if a request fails because the second server is in a congestion state (or high load), the first server indicates explicitly or implicitly in a response message that the requesting entity should perform a backoff before sending the next request. Specifically, the first server may include in the response message a failure cause indicating that the second server is congested. The failure cause implies that a backoff is required. Additionally or alternatively, the first server may include in the response message a value indicating a specific backoff time, a maximum backoff time, or a parameter for deriving any of these. The backoff time may be referred to as a backoff period or a backoff window.

If the response message does not indicate that a backoff is required, the requesting entity may send the next request without backoff. For example, the requesting entity may resend a request message, including the missing information indicated by the failure cause contained in the received response message.

In contrast, if the response message explicitly or implicitly indicates that a backoff is required, the requesting entity performs a backoff before sending the next request. In other words, the requesting entity delays sending the next request until at least the backoff time has elapsed. The backoff time may be specified by the first server or derived by the requesting entity. The requesting entity may determine a random backoff time using the maximum backoff time as an upper limit.

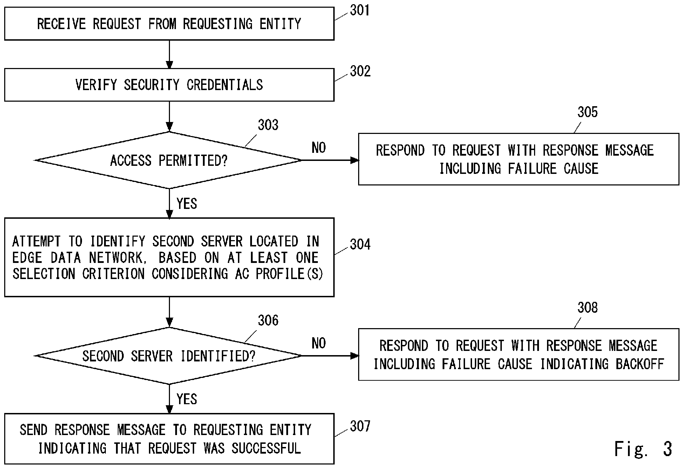

Fig. 3 is a flowchart showing an example of the operation of a first server according to this example embodiment. The first server attempts to identify (or discover, or select, or determine) a preferred or suitable edge server deployed in the EDN 4. In one example, the first server may be an EES 5, which may attempt to identify one or more EASs in response to a request from the EEC 2.

Steps 301-307 are similar to steps 201-207 in Fig. 2. In step 308, the first server (i.e., EES 5) responds to the request with a response message containing a failure cause indicating that congestion has occurred. This message explicitly or implicitly indicates that a backoff is required before the sending of the next request. Specifically, if the request fails because the second server is in a congestion state (or high load), then the first server may indicate in the response message that a backoff is required. If, in step 307, it is determined that the second server is congested (or under high load) but the second server is available, the first server may indicate the need for a backoff corresponding to the second server in the response message.

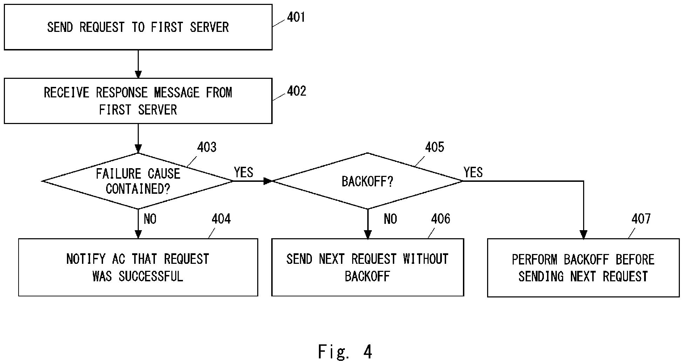

Fig. 4 shows a flowchart of an example of the operation of the requesting entity according to this example embodiment. In the case of EAS(s) selection (or decision, or discovery, or identification), the requesting entity may be the EEC 2.

In step 401, the requesting entity sends a request to the first server (e.g., EES 5). In step 402, the requesting entity receives a response message from the first server.

If the response message of step 402 does not contain a failure cause (NO in step 403), the procedure proceeds to step 404. In step 404, the requesting entity (e.g., EEC 2) notifies the AC that the request was successful. If the response message in step 402 indicates that a backoff is required, the requesting entity notifies the AC that the request was successful and that a backoff is required. The AC notified that a backoff is required may, for example, send a signal to the EAS after performing the backoff.

In contrast, if the response message of step 402 includes a failure cause (YES in step 403), the procedure proceeds to step 405. In step 405, the requesting entity determines whether the response message indicates that a backoff is required. If no backoff is required (NO in step 405), the requesting entity may send the next request without backoff (step 406). If a backoff is required (YES in step 405), the requesting entity performs the backoff before sending the next request.

According to the operations of the first server and requesting entity described above, when a request fails, the first server can delay the transmission of the next request by the requesting entity. In particular, when a request fails due to congestion in the second server, delaying the transmission of the next request by the requesting entity allows the congestion in the second server to be resolved or reduced.

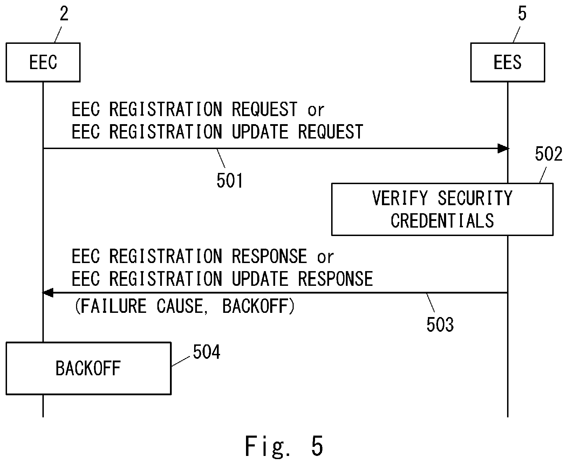

The following is a specific example of the implementation of the operations of the first server and requesting entity described above, with reference to Fig. 5. Fig. 5 shows an example of the operations of the EEC 2 and EES 5 in the EEC registration procedure based on the Request/Response model. The EEC 2 in Fig. 5 corresponds to the requesting entity described above, and the EES 5 in Fig. 5 corresponds to the first server described above. In step 501, the EEC 2 sends an EEC registration request or an EEC registration update request to the EES 5 as the request described above.

In step 502, the EES 5 verifies security credentials included in the request (corresponding to step 202 in Fig. 2 and step 302 in Fig. 3) and attempts to identify at least one EAS that meets at least one selection criterion (corresponding to step 204 in Fig. 2 and step 304 in Fig. 3). The at least one selection criterion considers a requirement (AC Profile(s)) included in the request. In addition, the at least one selection criterion may consider at least one of the congestion state of an EAS, the UE location, and the operational status of an EAS. The at least one selection criterion may consider other factors, for example, UE-specific service information in the EES 5, or ECSP policy. As described with reference to Fig. 3 (step 308), the EES 5 responds to the EEC 2 request with a response message containing a failure cause if it cannot identify an EAS that meets the at least one selection criterion.

In step 503, the EES 5 responds to the request from the EEC 2 with an EEC registration response or an EEC registration update response. Fig. 5 shows the case where the request from the EEC 2 fails. Thus, the response message in step 503 includes the failure cause. In addition, if the EAS is congested (or in a high load state), the response message explicitly or implicitly indicates that a backoff is required. If the response message explicitly indicates that a backoff is required, a backoff timer value may be further configured in the response message in step 503. In step 504, the EEC 2 delays sending the next request until at least the backoff time has elapsed.

Even if the EEC 2 request is successful, the EEC registration response or EEC registration update response in step 503 may explicitly or implicitly indicate that a backoff is required. For example, access from the EEC 2 to the EAS may be allowed when the EAS is in a congestion state, but only after a certain back-off operation. In this case, in step 504, the EEC 2 may delay sending the request to the EAS until at least the back-off time has elapsed.

### Third Example Embodiment

This example embodiment provides another example of the behaviors of the first server and the requesting entity. An example of the network architecture according to this example embodiment is the same as the example described with reference to Fig. 1.

In this example embodiment, the first server may differentiate a response message that is sent in the EEC registration to the requesting entity when the second server is not in an operational state from a response message sent when the second server cannot be discovered. In one example, the failure cause value set in the response message when the second server is not operational may be different from the value set in the response message when the second server cannot be discovered. This allows the requesting entity to distinguish between the type of response message (or type of failure cause). It also allows the requesting entity to take different actions depending on the type of response message (or type of failure cause).

If the requesting entity is the EEC 2 and receives in the EEC registration a response message containing a failure cause based on a selection criterion related to the operational status of EASs, the requesting entity (EEC 2) may act as follows. If the message is due to the fact that a second server (i.e., EAS) is not operational, then the EEC 2 aborts the EEC registration without resending an EEC registration request or an EEC registration update request. On the other hand, if the message is due to the fact that a second server (i.e., EAS) cannot be discovered, then the EEC 2 resends an EEC registration request or an EEC registration update request.

### Fourth Example Embodiment

This example embodiment provides modifications of the behaviors of the first server and the requesting entity described in the first example embodiment. An example of the network architecture according to this example embodiment is the same as the example described with reference to Fig. 1.

In this example embodiment, the requesting entity may be the EEC 2 and the first server may be an EES 5. If an EEC registration request fails, the requesting entity (i.e., EEC 2) may send an EEC registration request to another EES different from the first server (i.e., EES 5). The different EES from the first server may be pre-configured in the UE or ME in the service provisioning procedure. This different EES may be selected based on a policy preconfigured in the UE or ME, or based on the policy of the AC 3.

If EEC registration fails for all EES(s) configured in the UE or ME, the EEC 2 may perform a service provisioning procedure to the ECS 7 to obtain new EES(s) information from the ECS 7 and attempt EEC registration for a new EES(s) indicated (or configured) by the obtained information.

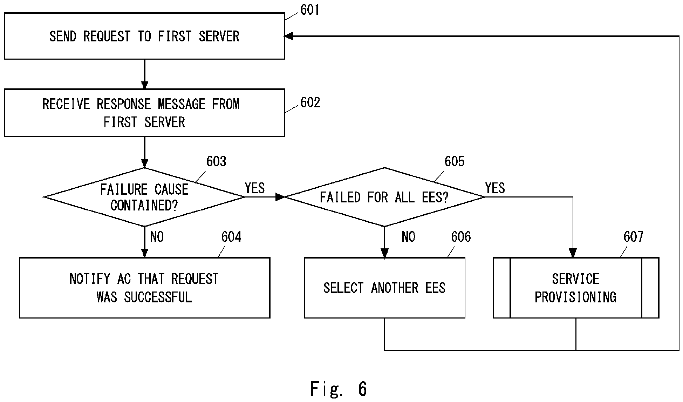

Fig. 6 is a flowchart showing an example of the operation of the requesting entity (i.e., EEC 2) according to this example embodiment. The requesting entity sends an EEC registration request to the first server. The first server attempts to identify (or discover, or select, or determine) a preferred or suitable edge server located in the EDN 4. In one example, the first server may be an EES 5 and may attempt to identify one or more EASs in response to the request from the EEC 2.

Steps 601-604 are similar to steps 401-404 in Fig. 4. If the response message in step 602 contains a failure cause (YES in step 603), the procedure proceeds to step 605. If there remains an EES configured in the UE or ME for which an EEC registration has not been attempted (NO in step 605), the EEC 2 selects another EES different from the first server (step 606) and returns to step 601 to attempt an EEC registration for that other EES.

On the other hand, if the EEC registration fails for all EESs configured in the UE or ME (YES in step 605), the EEC 2 obtains new EES(s) information from the ECS 7 by performing a service provisioning procedure to the ECS 7 (step 607). The EEC 2 then returns to step 601 and attempts EEC registration for the new EES(s) indicated (or configured) by the new information obtained.

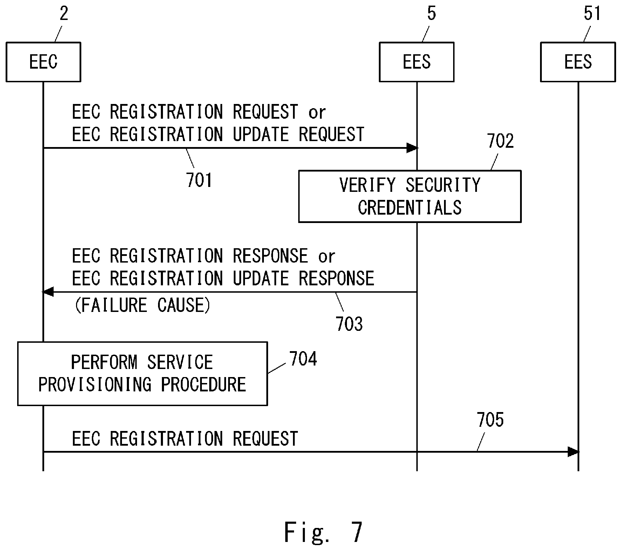

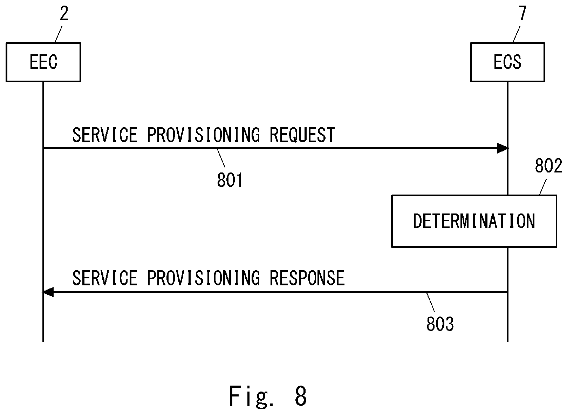

The following are specific examples of the implementation of the operations of the first server and request entity described above, with reference to Fig. 7 and Fig. 8. Fig. 7 shows an example of the behavior of the EEC 2 and EES 5 in the EEC registration procedure based on the Request/Response model. The EEC 2 in Fig. 5 corresponds to the requesting entity described above, and the EES 5 in Fig. 5 corresponds to the first server described above.

Steps 701 and 702 are similar to steps 501 and 502 in Fig. 4. In step 703, the EES 5 responds to the EEC 2 request with an EEC registration response or an EEC registration update response. Fig. 7 shows a case where the EEC 2 request is unsuccessful. Thus, the response message in step 703 contains a failure cause. In step 704, if the EEC registration fails for all EESs configured in the UE or ME, the EEC 2 performs a service provisioning procedure to the ECS 7, not shown, to obtain new EES(s) information from the ECS 7. In step 705, the EEC 2 attempts EEC registration by sending an EEC registration request to the new EES 51 indicated (or configured) by the new EES(s) information obtained in step 704.

Fig. 8 corresponds to step 704 in Fig. 7 and shows an example of the operations of the EEC 2 and ECS 7 in a service provisioning procedure based on the Request/Response model. In step 801, the EEC 2 sends a service provisioning request to the ECS 7. In step 802, the ECS 7 attempts to identify at least one EES that meets at least one selection criterion. The at least one selection criterion considers the congestion state of an EES. In addition, the at least one selection criterion may consider the UE location, or at least one Application Client profile provided by the EEC 2 via the request of step 801, or both. The at least one selection criterion may consider other factors, e.g., UE-specific service information in the ECS 7, or ECSP policy.

In step 803, the ECS 7 responds to the EEC 2 request with a service provisioning response. This response message may contain EDN configuration information, which may include information indicating a different EES (i.e., EES 51) than the EES 5.

The EDN configuration information may contain information indicating a plurality of items. Each item indicates one or more sets of characteristics. For example, the EDN configuration information includes "EDN connection information" and "List of EESs" and also includes "Lifetime". The EDN connection information indicates information needed for an EDN connection. The information needed for an EDN connection includes a DNN or Access Point Name (APN), and at least one of S-NSSAI or EDN Topological Service Area. The List of EESs indicates an EES list for this EDN. The EES list includes an EES ID and an EES Endpoint, plus at least one of the following: EASIDs, ECSP info, an EES Topological Service Area, an EES Geographical Service Area, or a List of EES DNAI(s). The Lifetime indicates the validity period of the EDN configuration information.

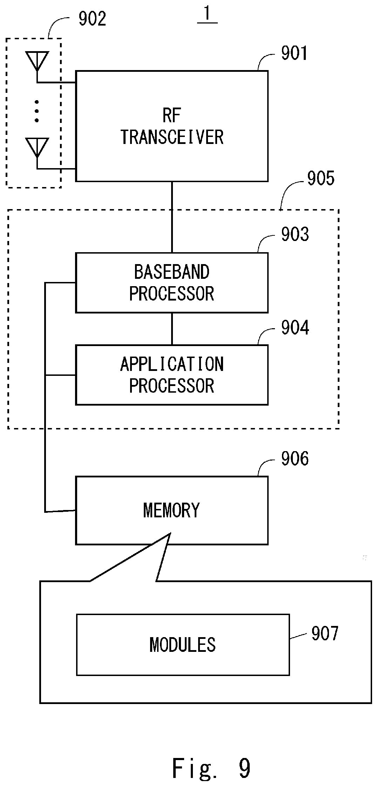

The following provides configuration examples of the UE 1, EES 5, EAS 6, ECS 7, and EES 51 according to the above-described example embodiments. Fig. 9 is a block diagram showing an example configuration of the UE 1. A Radio Frequency (RF) transceiver 901 performs analog RF signal processing to communicate with RAN nodes. The RF transceiver 901 may include a plurality of transceivers. The analog RF signal processing performed by the RF transceiver 901 includes frequency up-conversion, frequency down-conversion, and amplification. The RF transceiver 901 is coupled to an antenna array 902 and a baseband processor 903. The RF transceiver 901 receives modulated symbol data (or OFDM symbol data) from the baseband processor 903, generates a transmission RF signal, and supplies the transmission RF signal to the antenna array 902. Further, the RF transceiver 901 generates a baseband reception signal based on a reception RF signal received by the antenna array 902 and supplies the baseband reception signal to the baseband processor 903. The RF transceiver 901 may include an analog beamformer circuit for beam forming. The analog beamformer circuit includes, for example, a plurality of phase shifters and a plurality of power amplifiers.

The baseband processor 903 performs digital baseband signal processing (i.e., data-plane processing) and control-plane processing for radio communication. The digital baseband signal processing includes (a) data compression/decompression, (b) data segmentation/concatenation, (c) composition/decomposition of a transmission format (i.e., transmission frame) (d) channel coding/decoding, (e) modulation (i.e., symbol mapping)/demodulation, and (f) generation of OFDM symbol data (i.e., baseband OFDM signal) by Inverse Fast Fourier Transform (IFFT). Meanwhile, the control-plane processing includes communication management of layer 1 (e.g., transmission power control), layer 2 (e.g., radio resource management and hybrid automatic repeat request (HARQ) processing), and layer 3 (e.g., signaling regarding attach, mobility, and call management).

The digital baseband signal processing by the baseband processor 903 may include, for example, signal processing of Service Data Adaptation Protocol (SDAP), Packet Data Convergence Protocol (PDCP), Radio Link Control (RLC), Medium Access Control (MAC), and Physical (PHY) layers. The control-plane processing performed by the baseband processor 903 may include processing of Non-Access Stratum (NAS) protocols, Radio Resource Control (RRC) protocols, MAC Control Elements (CEs), and Downlink Control Information (DCIs).

The baseband processor 903 may perform Multiple Input Multiple Output (MIMO) encoding and pre-coding for beam forming.

The baseband processor 903 may include a modem processor (e.g., Digital Signal Processor (DSP)) that performs the digital baseband signal processing and a protocol stack processor (e.g., a Central Processing Unit (CPU) or a Micro Processing Unit (MPU)) that performs the control-plane processing. In this case, the protocol stack processor, which performs the control-plane processing, may be integrated with an application processor 904 described below.

The application processor 904 is also referred to as a CPU, an MPU, a microprocessor, or a processor core. The application processor 904 may include a plurality of processors (or processor cores). The application processor 904 loads a system software program (Operating System (OS)) and various application programs (e.g., a call application, a WEB browser, a mailer, a camera operation application, and a music player application) from a memory 906 or from another memory not shown and executes these programs, thereby providing various functions of the UE 1.

In some implementations, as represented by a dashed line (905) in Fig. 9, the baseband processor 903 and the application processor 904 may be integrated on a single chip. In other words, the baseband processor 903 and the application processor 904 may be implemented in a single System on Chip (SoC) device 905. The SoC device may be referred to as a Large-Scale Integration (LSI) or a chipset.

The memory 906 is a volatile memory, a non-volatile memory, or a combination thereof. The memory 906 may include a plurality of memory devices that are physically independent from each other. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disc drive, or any combination thereof. The memory 906 may include, for example, an external memory device that can be accessed from the baseband processor 903, the application processor 904, and the SoC 905. The memory 906 may include an internal memory device that is integrated in the baseband processor 903, the application processor 904, or the SoC 905. Further, the memory 906 may include a memory in a Universal Integrated Circuit Card (UICC).

The memory 906 may store one or more software modules (computer programs) 907 including instructions and data to perform the processing by the UE 1 described in the above example embodiments. In some implementations, the baseband processor 903 or the application processor 904 may load these software modules 907 from the memory 906 and execute the loaded software modules, thereby performing the processing of the UE 1 described in the above example embodiments with reference to the drawings.

The control-plane processing and operations performed by the UE 1 described in the above example embodiments can be achieved by elements other than the RF transceiver 901 and the antenna array 902, i.e., achieved by the memory 906, which stores the software modules 907, and one or both of the baseband processor 903 and the application processor 904.

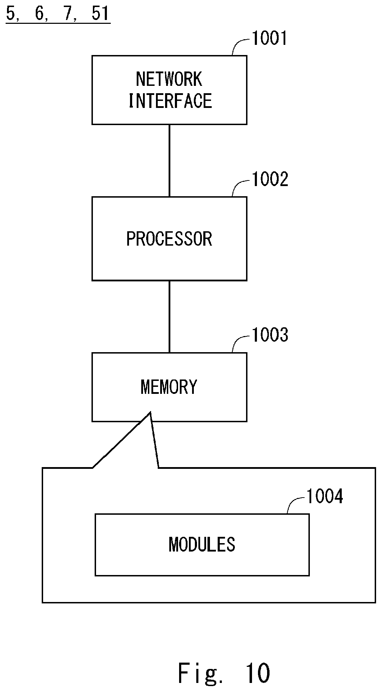

Fig. 10 shows an example configuration of the EES 5. The EAS 6, ECS 7, and EES 51 may also have the configuration as shown in Fig. 10. Referring to Fig. 10, the EES 5 (or EAS 6, or ECS 7) includes a network interface 1001, a processor 1002, and a memory 1003. The network interface 1001 is used to communicate with other network functions (NFs) or nodes. The network interface 1001 may include, for example, a network interface card (NIC) conforming to the IEEE 802.3 series.

The processor 1002 may be, for example, a microprocessor, a Micro Processing Unit (MPU), or a Central Processing Unit (CPU). The processor 1002 may include a plurality of processors.

The memory 1003 is composed of a volatile memory and a nonvolatile memory. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disc drive, or any combination thereof. The memory 1003 may include a storage located apart from the processor 1002. In this case, the processor 1002 may access the memory 1003 via the network interface 1001 or an I/O interface not shown.

The memory 1003 may store one or more software modules (computer programs) 1004 including instructions and data to perform the processing of the EES 5 (or EAS 6, or ECS 7) described in the above example embodiments. In some implementations, the processor 1002 may be configured to load the one or more software modules 1004 from the memory 1003 and execute the loaded software modules, thereby performing the processing of the EES 5 (or EAS 6, or ECS 7) described in the above example embodiments.

As described using Figs. 9 and 10, each of the processors in the UE 1, EES 5, EAS 6, and ECS 7 according to the example embodiments described above executes one or more programs, containing a set of instructions, to cause a computer to perform an algorithm described with reference to the drawings. These programs can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g., magneto-optical disks), Compact Disc Read Only Memory (CD-ROM), CD-R, CD-R/W, and semiconductor memories (such as mask ROM, Programmable ROM (PROM), Erasable PROM (EPROM), flash ROM, Random Access Memory (RAM), etc.). These programs may be provided to a computer using any type of transitory computer readable media. Examples of transitory computer readable media include electric signals, optical signals, and electromagnetic waves. Transitory computer readable media can provide the programs to a computer via a wired communication line (e.g., electric wires, and optical fibers) or a wireless communication line.

The User Equipment (UE) in the present disclosure is an entity to be connected to a network via a wireless interface. It should be noted that the radio terminal (UE) in the present disclosure is not limited to a dedicated communication device, and it may be any device as follows having the communication functions herein explained.

The terms "User Equipment (UE)" (as the term is used by 3GPP), "mobile station", "mobile terminal", "mobile device", and "radio terminal (wireless device)" are generally intended to be synonymous with one another. The UE may include standalone mobile stations, such as terminals, cell phones, smartphones, tablets, cellular IoT (internet of things) terminals, and IoT devices. It will be appreciated that the terms "UE" and "radio terminal" also encompass devices that remain stationary for a lengthy period of time.

A UE may, for example, be an item of equipment for production or manufacture and/or an item of energy related machinery (for example equipment or machinery such as: boilers; engines; turbines; solar panels; wind turbines; hydroelectric generators; thermal power generators; nuclear electricity generators; batteries; nuclear systems and/or associated equipment; heavy electrical machinery; pumps including vacuum pumps; compressors; fans; blowers; oil hydraulic equipment; pneumatic equipment; metal working machinery; manipulators; robots and/or their application systems; tools; molds or dies; rolls; conveying equipment; elevating equipment; materials handling equipment; textile machinery; sewing machines; printing and/or related machinery; paper making machinery; chemical machinery; mining and/or construction machinery and/or related equipment; agriculture, forestry and/or fisheries machinery and/or implements; safety and/or environment preservation equipment; tractors; bearings; precision bearings; chains; gears; power transmission equipment; lubricators; valves; pipe fittings; and/or application systems for any of the previously mentioned equipment or machinery etc.).

A UE may, for example, be an item of transport equipment (for example transport equipment such as: rolling stocks; motor vehicles; motorcycles; bicycles; trains; buses; carts; rickshaws; ships and other watercraft; aircraft; rockets; satellites; drones; balloons etc.).

A UE may, for example, be an item of information and communication equipment (for example information and communication equipment such as: electronic computer and related equipment; communication and related equipment; electronic components etc.).

A UE may, for example, be an item of refrigeration equipment, a refrigeration application product and equipment, trade and/or service industry equipment, a vending machine, an automatic service machine, an office machine or equipment, a consumer electronic and electronic appliance (for example a consumer electronic appliance such as: audio equipment; a speaker; a radio; video equipment; a television; an oven range; a rice cooker; a coffee maker; a dishwasher; a washing machine; dryers, a fan, an exhaust fan and related products, a vacuum cleaner etc.).

A UE may, for example, be an electrical application system or equipment (for example an electrical application system or equipment such as: an x-ray system; a particle accelerator; radio isotope equipment; sonic equipment; electromagnetic application equipment; electronic power application equipment etc.).

A UE may, for example, be an electronic lamp, a luminaire, a measuring instrument, an analyzer, a tester, or a surveying or sensing instrument (for example a surveying or sensing instrument such as: a smoke alarm; a human alarm sensor; a motion sensor; a wireless tag etc.), a watch or clock, a laboratory instrument, optical apparatus, medical equipment and/or system, a weapon, a sharp-edged tool, a hand tool, or the like.

A UE may, for example, be a personal digital assistant or device with wireless communication capabilities (such as a wireless card or module designed for attachment to or for insertion into another electronic device (for example a personal computer, electrical measuring machine)).

A UE may be a device or a part of a system that provides applications, services, and solutions described below, as to "internet of things (IoT)", using a variety of wired and/or wireless communication technologies. Internet of Things devices (or "things") may be equipped with appropriate electronics, software, sensors, network connectivity, and/or the like, which enable these devices to collect and exchange data with each other and with other communication devices. IoT devices may comprise automated equipment that follow software instructions stored in an internal memory. IoT devices may operate without requiring human supervision or interaction. IoT devices might also remain stationary and/or inactive for a lengthy period of time. IoT devices may be implemented as a part of a (generally) stationary apparatus. IoT devices may also be embedded in non-stationary apparatus (e.g., vehicles) or attached to animals or persons to be monitored/tracked. It will be appreciated that IoT technology can be implemented on any communication devices that can connect to a communications network for sending/receiving data, regardless of whether such communication devices are controlled by human input or software instructions stored in memory. It will be appreciated that IoT devices are sometimes also referred to as Machine-Type Communication (MTC) devices, Machine-to-Machine (M2M) communication devices, or Narrow Band-IoT (NB-IoT) UE.

It will be appreciated that a UE may support one or more IoT or MTC applications.

Some examples of MTC applications are listed in 3GPP TS 22.368 V13.2.0 (2017-01-13), Annex B (the contents of which are incorporated herein by reference). This list is not exhaustive and is intended to be indicative of some examples of MTC applications. In this list, the Service Area of the MTC applications includes security, tracking & tracing, payment, health, remote maintenance/control, metering, and consumer devices.

Examples of the MTC applications regarding Security include surveillance systems, backup for landline telephone, control of physical access (e.g., to buildings), and car/driver security.

Examples of the MTC applications regarding tacking & tracing include fleet management, order management, telematics insurance: pay as you drive (PAYD), asset tracking, navigation, traffic information, road tolling, and road traffic optimisation/steering.

Examples of the MTC applications regarding payment include point of sales (POS), vending machines, and gaming machines.

Examples of the MTC applications regarding health include monitoring vital signs, supporting the aged or handicapped, web access telemedicine points, and remote diagnostics.

Examples of the MTC applications regarding remote maintenance/control include sensors, lighting, pumps, valves, elevator control, vending machine control, and vehicle diagnostics.

Examples of the MTC applications regarding metering include power, gas, water, heating, grid control, and industrial metering.

Examples of the MTC applications regarding consumer devices include digital photo frame, digital camera, and ebook.

Applications, services, and solutions may be an mobile virtual network operator (MVNO) service/system, an emergency radio communication service/system, a private branch exchange (PBX) service/system, a PHS/digital cordless telecommunications service/system, a point of sale (POS) service/system, an advertise calling service/system, a Multimedia Broadcast and Multicast Service (MBMS) service/system, a Vehicle to Everything (V2X) service/system, a train radio service/system, a location related service/system, a disaster/emergency wireless communication service/system, an Internet of Things (IoT) service/system, a community service/system, a video streaming service/system, a femto cell application service/system, a Voice over LTE (VoLTE) service/system, a radio tag service/system, a charging service/system, a radio on demand service/system, a roaming service/system, an activity monitoring service/system, a telecom carrier/communication NW selection service/system, a functional restriction service/system, a proof of concept (PoC) service/system, a personal information management service/system, a display video service/system, a noncommunication service/system, an ad-hoc network/ delay tolerant networking (DTN) service/system, etc.

The above-described UE categories are merely examples of applications of the technical ideas and embodiments described in the present disclosure. The UE described in this disclosure is not limited to these examples and various modifications can be made thereto by those skilled in the art.

The above-described example embodiments are merely examples of applications of the technical ideas obtained by the inventors. These technical ideas are not limited to the above-described example embodiments and various modifications can be made thereto.

The whole or part of the example embodiments disclosed above can be described as, but not limited to, the following supplementary notes.

### (Supplementary Note 1)

A first server comprising:
a memory; and
at least one processor coupled to the memory and configured to:
   receive from a requesting entity a request for generating an Edge Enabler Client (EEC) Context which is information about the requesting entity, the request including security credentials and at least one Application Client Profile;
   determine whether or not access to an edge data network is permissible by verifying the security credentials;
   if access to the edge data network is permissible, attempt to identify a second server located in the edge data network based on at least one selection criterion; and
   if the second server is identified, send to the requesting entity a first response message containing information indicating that the request was successful, wherein
the at least one selection criterion includes a requirement indicated in the at least one Application Client Profile, and
the at least one processor is configured to, if the access to the edge data network is not permissible or the requirement indicated in the at least one Application Client Profile is not fulfilled, send to the requesting entity a second response message containing a failure cause, which is information indicating that the second server cannot be identified.

### (Supplementary Note 2)

The first server according to Supplementary Note 1, wherein the second response message causes the requesting entity to do at least one of: aborting the request, suppressing transmission of the request, retransmitting the request, or notifying an application.

### (Supplementary Note 3)

The first server according to Supplementary Note 1 or 2, wherein
the first server is an Edge Enabler Server (EES),
the second server is an Edge Application Server (EAS), and
the requesting entity is an Edge Enabler Client (EEC) located in a User Equipment (UE).

### (Supplementary Note 4)

The first server according any one of Supplementary Notes 1 to 3, wherein at least one of the first response message and the second response message includes information indicating that the requesting entity is required to perform a backoff before sending a next request.

### (Supplementary Note 5)

The first server according to Supplementary Note 4, wherein at least one of the first response message and the second response message includes information for identifying a specific backoff time or a maximum backoff time for the backoff.

### (Supplementary Note 6)

The first server according to Supplementary Note 4 or 5, wherein the information indicating that the backoff needs to be performed includes at least one of: information for identifying a specific backoff time or a maximum backoff time, and a failure cause.

### (Supplementary Note 7)

A method performed by a first server, the method comprising:
receiving from a requesting entity a request for generating an Edge Enabler Client (EEC) Context which is information about the requesting entity, the request including security credentials and at least one Application Client Profile;
determining whether or not access to an edge data network is permissible by verifying the security credentials;
if access to the edge data network is permissible, attempting to identify a second server located in the edge data network based on at least one selection criterion; and
if the second server is identified, sending to the requesting entity a first response message containing information indicating that the request was successful, wherein
the at least one selection criterion includes a requirement indicated in the at least one Application Client Profile, and
the method further comprises, if the access to the edge data network is not permissible or the requirement indicated in the at least one Application Client Profile is not fulfilled, sending to the requesting entity a second response message containing a failure cause, which is information indicating that the second server cannot be identified.

### (Supplementary Note 8)

A non-transitory computer readable medium storing a program for causing a computer to perform a method for a first server, wherein the method comprises:
receiving from a requesting entity a request for generating an Edge Enabler Client (EEC) Context which is information about the requesting entity, the request including security credentials and at least one Application Client Profile;
determining whether or not access to an edge data network is permissible by verifying the security credentials;
if access to the edge data network is permissible, attempting to identify a second server located in the edge data network based on at least one selection criterion; and
if the second server is identified, sending to the requesting entity a first response message containing information indicating that the request was successful, wherein
the at least one selection criterion includes a requirement indicated in the at least one Application Client Profile, and
the method further comprises, if the access to the edge data network is not permissible or the requirement indicated in the at least one Application Client Profile is not fulfilled, sending to the requesting entity a second response message containing a failure cause, which is information indicating that the second server cannot be identified.

### (Supplementary Note 9)

A requesting entity comprising:
a memory; and
at least one processor coupled to the memory and configured to:
   send to a first server a request for generating an Edge Enabler Client (EEC) Context which is information about the requesting entity, the request including security credentials and at least one Application Client Profile;
   receive a response message to the request from the first server; and
   if the response message includes a failure cause, which is information indicating that a second server cannot be identified, send the request to a first server that is different from the first server, wherein
the failure cause is included in the response message if access to an edge data network is not permissible, or if a requirement indicated in the at least one Application Client Profile is not fulfilled.

### (Supplementary Note 10)

The requesting entity according to Supplementary Note 9, wherein
the first server is an Edge Enabler Server (EES),
the second server is an Edge Application Server (EAS), and
the requesting entity is an Edge Enabler Client (EEC) located in a User Equipment (UE).

### (Supplementary Note 11)

A method performed by a requesting entity, the method comprising:
sending to a first server a request for generating an Edge Enabler Client (EEC) Context which is information about the requesting entity, the request including security credentials and at least one Application Client Profile;
receiving a response message to the request from the first server; and
if the response message includes a failure cause, which is information indicating that a second server cannot be identified, sending the request to a first server that is different from the first server, wherein
the failure cause is included in the response message if access to an edge data network is not permissible, or if a requirement indicated in the at least one Application Client Profile is not fulfilled.

### (Supplementary Note 12)

A non-transitory computer readable medium storing a program for causing a computer to perform a method for a requesting entity, wherein the method comprises:
sending to a first server a request for generating an Edge Enabler Client (EEC) Context which is information about the requesting entity, the request including security credentials and at least one Application Client Profile;
receiving a response message to the request from the first server; and
if the response message includes a failure cause, which is information indicating that a second server cannot be identified, sending the request to a first server that is different from the first server, wherein
the failure cause is included in the response message if access to an edge data network is not permissible, or if a requirement indicated in the at least one Application Client Profile is not fulfilled.

This application is based upon and claims the benefit of priority from Japanese Patent Application No. 2021-079697, filed on May 10, 2021, the disclosure of which is incorporated herein in its entirety by reference.

### Reference Signs List

- 1: User Equipment (UE)
- 2: Edge Enabler Client (EEC)
- 3: Application client (AC)
- 4: Edge Data Network (EDN)
- 5: Edge Enabler Server (EES)
- 51: Edge Enabler Server (EES)
- 6: Edge Application Server (EAS)
- 7: Edge Configuration Server (ECS)
- 903: Baseband Processor
- 904: Application Processor
- 906: Memory
- 907: Modules
- 1002: Processor
- 1003: Memory
- 1004: Modules

## Claims

1. A first server comprising:
a memory; and
at least one processor coupled to the memory and configured to:
receive from a requesting entity a request for generating an Edge Enabler Client (EEC) Context which is information about the requesting entity, the request including security credentials and at least one Application Client Profile;
determine whether or not access to an edge data network is permissible by verifying the security credentials;
if access to the edge data network is permissible, attempt to identify a second server located in the edge data network based on at least one selection criterion; and
if the second server is identified, send to the requesting entity a first response message containing information indicating that the request was successful, wherein
the at least one selection criterion includes a requirement indicated in the at least one Application Client Profile, and
the at least one processor is configured to, if the access to the edge data network is not permissible or the requirement indicated in the at least one Application Client Profile is not fulfilled, send to the requesting entity a second response message containing a failure cause, which is information indicating that the second server cannot be identified.

2. The first server according to claim 1, wherein the second response message causes the requesting entity to do at least one of: aborting the request, suppressing transmission of the request, retransmitting the request, or notifying an application.

3. The first server according to claim 1 or 2, wherein
the first server is an Edge Enabler Server (EES),
the second server is an Edge Application Server (EAS), and
the requesting entity is an Edge Enabler Client (EEC) located in a User Equipment (UE).

4. The first server according any one of claims 1 to 3, wherein at least one of the first response message and the second response message includes information indicating that the requesting entity is required to perform a backoff before sending a next request.

5. The first server according to claim 4, wherein at least one of the first response message and the second response message includes information for identifying a specific backoff time or a maximum backoff time for the backoff.

6. The first server according to claim 4 or 5, wherein the information indicating that the backoff needs to be performed includes at least one of: information for identifying a specific backoff time or a maximum backoff time, and a failure cause.

7. A method performed by a first server, the method comprising:
receiving from a requesting entity a request for generating an Edge Enabler Client (EEC) Context which is information about the requesting entity, the request including security credentials and at least one Application Client Profile;
determining whether or not access to an edge data network is permissible by verifying the security credentials;
if access to the edge data network is permissible, attempting to identify a second server located in the edge data network based on at least one selection criterion; and
if the second server is identified, sending to the requesting entity a first response message containing information indicating that the request was successful, wherein
the at least one selection criterion includes a requirement indicated in the at least one Application Client Profile, and
the method further comprises, if the access to the edge data network is not permissible or the requirement indicated in the at least one Application Client Profile is not fulfilled, sending to the requesting entity a second response message containing a failure cause, which is information indicating that the second server cannot be identified.

8. A non-transitory computer readable medium storing a program for causing a computer to perform a method for a first server, wherein the method comprises:
receiving from a requesting entity a request for generating an Edge Enabler Client (EEC) Context which is information about the requesting entity, the request including security credentials and at least one Application Client Profile;
determining whether or not access to an edge data network is permissible by verifying the security credentials;
if access to the edge data network is permissible, attempting to identify a second server located in the edge data network based on at least one selection criterion; and
if the second server is identified, sending to the requesting entity a first response message containing information indicating that the request was successful, wherein
the at least one selection criterion includes a requirement indicated in the at least one Application Client Profile, and
the method further comprises, if the access to the edge data network is not permissible or the requirement indicated in the at least one Application Client Profile is not fulfilled, sending to the requesting entity a second response message containing a failure cause, which is information indicating that the second server cannot be identified.

9. A requesting entity comprising:
a memory; and
at least one processor coupled to the memory and configured to:
send to a first server a request for generating an Edge Enabler Client (EEC) Context which is information about the requesting entity, the request including security credentials and at least one Application Client Profile;
receive a response message to the request from the first server; and
if the response message includes a failure cause, which is information indicating that a second server cannot be identified, send the request to a first server that is different from the first server, wherein
the failure cause is included in the response message if access to an edge data network is not permissible, or if a requirement indicated in the at least one Application Client Profile is not fulfilled.

10. The requesting entity according to claim 9, wherein
the first server is an Edge Enabler Server (EES),
the second server is an Edge Application Server (EAS), and
the requesting entity is an Edge Enabler Client (EEC) located in a User Equipment (UE).

11. A method performed by a requesting entity, the method comprising:
sending to a first server a request for generating an Edge Enabler Client (EEC) Context which is information about the requesting entity, the request including security credentials and at least one Application Client Profile;
receiving a response message to the request from the first server; and
if the response message includes a failure cause, which is information indicating that a second server cannot be identified, sending the request to a first server that is different from the first server, wherein
the failure cause is included in the response message if access to an edge data network is not permissible, or if a requirement indicated in the at least one Application Client Profile is not fulfilled.

12. A non-transitory computer readable medium storing a program for causing a computer to perform a method for a requesting entity, wherein the method comprises:
sending to a first server a request for generating an Edge Enabler Client (EEC) Context which is information about the requesting entity, the request including security credentials and at least one Application Client Profile;
receiving a response message to the request from the first server; and
if the response message includes a failure cause, which is information indicating that a second server cannot be identified, sending the request to a first server that is different from the first server, wherein
the failure cause is included in the response message if access to an edge data network is not permissible, or if a requirement indicated in the at least one Application Client Profile is not fulfilled.
